Europäisches Patentamt

European Patent Office

Office européen des brevets

(19)

(11) Veröffentlichungsnummer: **0 024 350**
**B1**

(12) # EUROPÄISCHE PATENTSCHRIFT

(45) Veröffentlichungstag der Patentschrift:
23.03.83

(51) Int. Cl.³: **G 01 C 19/34**

(21) Anmeldenummer: **80104836.4**

(22) Anmeldetag: **14.08.80**

(54) **Kursanzeiger.**

(30) Priorität: **15.08.79 US 66702**

(43) Veröffentlichungstag der Anmeldung:
**04.03.81 Patentblatt 81/9**

(45) Bekanntmachung des Hinweises auf die Patenterteilung:
**23.03.83 Patentblatt 83/12**

(84) Benannte Vertragsstaaten:
**BE DE FR GB IT NL SE**

(56) Entgegenhaltungen:
**DE-A-1 548 467    GB-A-1 009 169**
**DE-A-2 627 037    GB-A-1 176 228**
**DE-B-1 282 300    US-A-3 394 596**
**FR-A-2 260 083    US-A-3 619 906**
**ARCHIV FÜR ELEKTROTECHNIK, Band 54, 1971,**
**Seiten 102—107 Springer Verlag Berlin, DE. W.**
**AUER: »Über einen neuartigen nordsuchenden**
**Kurskreisel«**
**IRE TRANSACTIONS ON AEROSPACE AND**
**NAVIGATIONAL ELECTRONICS, Band ANE 9, Nr.**
**3, September 1969, Seiten 141—145 IEEE INC.,**
**New York, U.S.A. R. H. PARVIN: »Inertial**
**Navigation Systems: Prelaunch Alignment«**

(73) Patentinhaber: **The Singer Company, 8 Stamford Forum,**
**Stamford Connecticut 06904 (US)**

(72) Erfinder: **Galuschak, George, 26 Michigan Avenue,**
**Hasbrouck Heights New Jersey (US)**
Erfinder: **Stomber, Richard Joseph, 101 Kiwanis Drive,**
**Wayne New Jersey (US)**

(74) Vertreter: **Oedekoven, Wolf-Dieter, Dipl. Ing. et al,**
**Widenmayerstrasse 5, D-8000 München 22 (DE)**

## Kursanzeiger

Die Erfindung bezieht sich auf einen Kursanzeiger, insbesondere für Panzer, der im Oberbegriff des Patentanspruchs 1 angegebenen Gattung.

Derartige Kursanzeiger sind bekannt (DE-A-1 548 467). Es handelt sich um Richtungskreisel mit kardanischer Aufhängung in einem Zweirahmensystem und einem Abgriff, welcher Abweichungen der Laufachse aus der Horizontalen mißt, wobei sowohl an der mittleren als auch an der äußeren Kardanrahmenachse Drehmomenterzeuger angeordnet sind, die von dem vom Abgriff gelieferten Signal über Verstärker angesteuert werden. Der an der mittleren Kardanrahmenachse sitzende Drehmomenterzeuger ist wahlweise an- und abschaltbar, um das Arbeiten als nordsuchender Kreisel bzw. als Kurskreisel zu bewirken.

Der Erfindung liegt die Aufgabe zugrunde, einen Kursanzeiger der im Oberbegriff des Patentanspruchs 1 angegebenen Gattung zu schaffen, welcher weiter vereinfacht ist, insbesondere einen Servomechanismus zur Kopplung des Kreiselausgangs mit einer ablesbaren Kursanzeigeeinrichtung überflüssig macht.

Diese Aufgabe ist durch die im kennzeichnenden Teil des Patentanspruchs 1 angegebenen Merkmale gelöst. Vorteilhafte Ausgestaltungen des erfindungsgemäßen Kursanzeigers sind in den restlichen Patentansprüchen gekennzeichnet.

Der erfindungsgemäße Kursanzeiger weist eine Plattform mit einem Freiheitsgrad auf, die durch einen Kreisel mit drei Freiheitsgraden und zwei Empfindlichkeitsachsen stabilisiert ist. Dabei ist eine Schaltung vorgesehen, um den Kreisel anfänglich im Kreiselkompaßausrichtbetrieb auf den wahren Norden auszurichten, wonach er als Kurskreisel dient. Zu diesem Zweck ist eine der Empfindlichkeitsachsen des Kreisels über einen Verstärker mit einem dieser Empfindlichkeitsachse zugeordneten Drehmomenterzeuger gekoppelt und über einen weiteren Verstärker mit einem der anderen Empfindlichkeitsachse zugeordneten Drehmomenterzeuger koppelbar, während die andere Empfindlichkeitsachse des Kreisels über einen zusätzlichen Verstärker mit einem der Plattform zugeordneten Drehmomenterzeuger gekoppelt ist. Der Verstärker zwischen der erstgenannten Empfindlichkeitsachse des Kreisels und dem der anderen Empfindlichkeitsachse zugeordneten Drehmomenterzeuger wird beim Kreiselkompaßausrichtbetrieb des Kursanzeigers vom Kreiselgeschwindigkeitsfesselstrom als direkte Nordmeßgröße betrieben. An der Plattform bzw. oben an dem damit verbundenen Gehäuse des Kreisels ist eine kegelstumpfförmige Kompaßkarte angebracht, so daß eine unmittelbare Kreiselkursinformationsentnahme gewährleistet ist.

Nachstehend ist eine Ausführungsform des erfindungsgemäßen Kursanzeigers anhand der Zeichnung beispielsweise beschrieben. Darin zeigt

Figur 1 schematisch eine perspektivische Ansicht eines Kursanzeigers für Panzer und

Figur 2 ein Blockschaltbild des Kursanzeigers gemäß Figur 1.

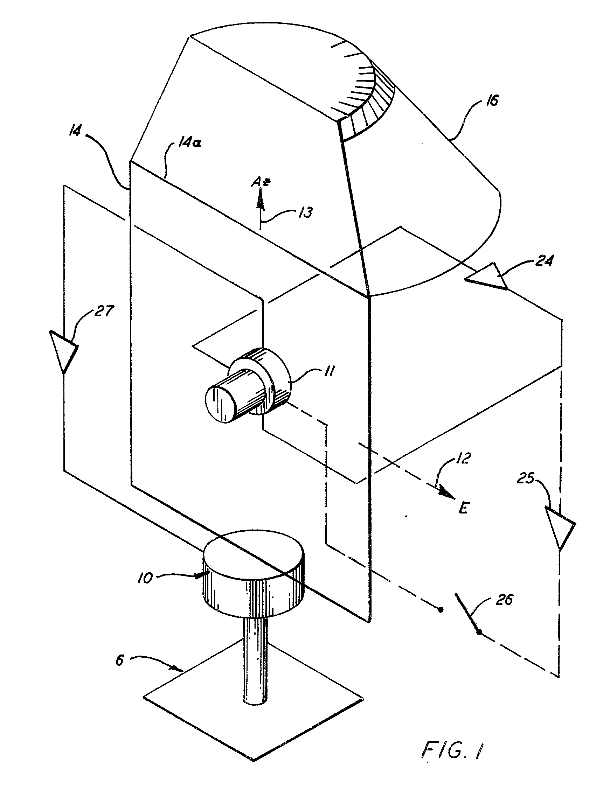

Der Kursanzeiger gemäß Fig. 1 weist eine Basis 6 auf, welche eine Plattform 10 mit einem Freiheitsgrad trägt. Die Plattform 10 ist um eine senkrechte Achse drehbar gelagert und durch einen Kreisel 11 mit drei Freiheitsgraden stabilisiert, der so orientiert ist, daß seine beiden Empfindlichkeitsachsen sich entlang der Ostachse 12 bzw. der Azimut- oder Hochachse 13 erstrecken.

Der trockene Kreisel 11 weist ein Gehäuse, einen darin mittels eines kardanischen Biegegelenks um jede der beiden Empfindlichkeitsachsen bzw. sowohl um die Ostachse 12 als auch um die Hochachse 13 kippbar aufgehängten Läufer und einen Motor auf, welcher den Läufer mit einer vorgegebenen Geschwindigkeit in Umlauf hält. Das Gehäuse ist an einem Azimut- oder Kursrahmen 14 angebracht oder mit einem solchen ausgebildet und durch den Kursrahmen 14 mit der Plattform 10 verbunden. Zur Kursanzeige ist eine 45°-kegelstumpfförmige Kompaßkarte 16 unmittelbar am Kursrahmen 14 angebracht, so daß ein Servomechanismus überflüssig und die jeweilige Kursanzeige sowohl bei Betrachtung des Kursanzeigers senkrecht von oben als auch bei Betrachtung des Kursanzeigers waagerecht von der Seite her sichtbar ist.

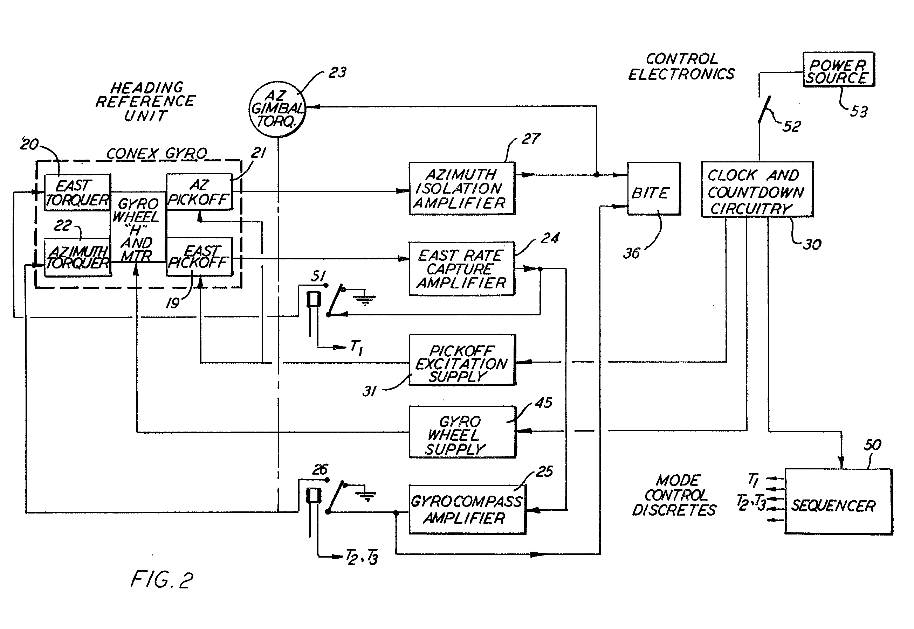

Gemäß Fig. 2 weist der Kreisel 11 ferner einen Ostachse-Abgriff 19 zum Erfassen der Relativdrehung des Gehäuses um die Ostachse 12, einen Ostachse-Drehmomenterzeuger 20 zum Nachstellen des Läufers um die Ostachse 12, einen Hochachse-Abgriff 21 zum Erfassen der Relativdrehung des Gehäuses um die Hochachse 13 und einen Hochachse-Drehmomenterzeuger 22 zur Bewegung des Läufers um die Hochachse 13 auf. Zum Drehen der Plattform 10 und des daran angebrachten Kursrahmens 14 mit dem Gehäuse des Kreisels 11 um die Hochachse 13 dient ein Kursrahmen-Drehmomenterzeuger 23.

Der Ostachse-Abgriff 19 ist mit dem Ostachse-Drehmomenterzeuger 20 über einen Ostachse-Geschwindigkeitsfesselverstärker 24 gekoppelt, der weiterhin den Hochachse-Drehmomenterzeuger 22 über einen Kreiselkompaßverstärker 25 beaufschlagt. Zwischen dem Kreiselkompaßverstärker 25 und dem Hochachse-Drehmomenterzeuger 22 ist ein Relais 26 vorgesehen. Der Hochachse-Abgriff 21 ist mit dem Kursrahmen-Drehmomenterzeuger 23 mittels eines Hochachse-Trennverstärkers 27 gekoppelt, so daß der Kursrahmen-Drehmomenterzeuger 23 den Kursrahmen 14 bewegt, um ihn auf den Läufer des Kreisels 11 ausgerichtet zu halten.

Eine Taktgeber- und Countdownschaltung 30 ist mit einer Abgrifferregerschaltung 31 verbunden. Die Taktgeber- und Countdownschaltung 30 weist einen Kristalloszillator-Taktgeber auf, welcher eine Diodentransistorlogikniveau-Rechteckspannung liefert, ferner Countdownlogik, welche mit Hilfe des Taktgebereingangssignals eine Rechteckspannung für die Abgrifferregerschaltung 31 hervorbringt. Bei dieser handelt es sich um einen Verstärker, welcher mit Hilfe des logischen Eingangssignals eine stabile Sinusschwingung mit geringer Verzerrung liefert, was durch kombiniertes Filtern und Rückkoppeln erreicht wird. Mit dem elektrischen Ausgangssignal der Abgrifferregerschaltung 31 in Form einer Sinusschwingung werden der Ostachse-Abgriff 19 und der Azimutachse-Abgriff 21 erregt.

Das elektrische Ausgangssignal des Hochachse-Abgriffs 21 wird durch den Hochachse-Trennverstärker 27 verstärkt, dessen elektrisches Ausgangssignal den Kursrahmen-Drehmomenterzeuger 23 treibt. Der Hochachse-Trennverstärker 27 enthält einen Proportionalverstärkungskanal und einen parallelen Integralkanal, um eine Gesamtservoschleifenkompensation mit hinreichender Verstärkungs- und Phasentoleranz zu erzielen. Die beiden Signale werden in einem Operationsverstärker summiert, dessen Ausgangssignal eine H-Brücke-Ausgangsschaltung mit dem Kursrahmen-Drehmomenterzeuger 23 als Last treibt, wobei ein mit dem Kursrahmen-Drehmomenterzeuger 23 in Reihe geschaltetes Relais dazu verwendet wird, die Hochachse-Trennschleife zu Beginn zu schließen, ferner sie zu öffnen, wenn eine eingebaute Prüfschaltung 36 einen Fehler feststellt.

Die eingebaute Prüfschaltung 36 überprüft die Hochachse-Trennschleife, welche den Hochachse-Abgriff 21, den Hochachse-Trennverstärker 27 und den Kursrahmen-Drehmomenterzeuger 23 umfaßt, und die Kreiselkompaßschleife, welche den Ostachse-Abgriff 19, den Ostachse-Geschwindigkeitsfesselverstärker 24, den Kreiselkompaßverstärker 25 und den Hochachse-Drehmomenterzeuger 22 umfaßt. Die eingebaute Prüfschaltung 36 wird eingeschaltet, wenn die anfänglichen Einschalt- und Einschwingvorgänge des Systems zur Ruhe gekommen sind. Normalerweise befindet sich sowohl die Hochachse-Trennschleife als auch die Kreiselkompaßschleife stets im Null-Zustand. Wenn jedoch ein großes Signal von beispielsweise annähernd 10 Volt Gleichspannung an einem der Schleifenausgänge über eine längere Zeitspanne von beispielsweise 250 m sec erscheint, dann gibt die eingebaute Prüfschaltung 36 eine Fehlerwarnung ab. Im Falle eines Hochachse-Trennschleifenfehlers wird das mit dem Kursrahmen-Drehmomenterzeuger 23 in Reihe liegende Relais geöffnet, wie erwähnt.

Das elektrische Ausgangssignal des Ostachse-Abgriffs 19 wird dem Ostachse-Geschwindigkeitsfesselverstärker 24 zugeführt, welcher in bekannter Weise einen Wechselspannungsvorverstärker und einen synchronen Demodulator aufweist, der mit dem Vorverstärker zur Quadraturunterdrückung gekoppelt ist. Ferner sind Operationsverstärker zur Integration und Schleifenservokompensation vorgesehen. Die nächste Stufe weist ein Kerbfilter mit einem Operationsverstärker und Widerständen sowie Kondensatoren in paralleler T-Schaltung zur Erzielung einer hohen Dämpfung auf. Die Ausgangsstufe dieser Schleife ist als Stromverstärker mit Rückkopplung von einem mit dem Ostachse-Drehmomenterzeuger 20 in Reihe liegenden Widerstand ausgebildet. Die Schleifenverstärkung wird dadurch verändert, daß ein Lastwiderstand in Reihe mit dem Ostachse-Drehmomenterzeuger 20 geshuntet wird.

Das elektrische Ausgangssignal des Ostachse-Geschwindigkeitsfesselverstärkers 24 geht dem Kreiselkompaßverstärker 25 zu, um einen Leistungssummierverstärker in einer Stromrückkopplungsschaltung beim Kreiselkompaßausrichtbetrieb zu speisen. Beim Kurskreiselbetrieb ist der Haupteingang des Summierverstärkers geerdet, während ein Korrektursignal einer Azimut- oder Hochachsekreiseldriftkompensation dem Summierverstärker eingegeben werden kann. Operationsverstärker mit geringer Drift werden in dieser Schaltung verwendet, um die gewünschte Systemgenauigkeit zu erzielen. Das elektrische Ausgangssignal des Kreiselkompaßverstärkers 25 geht über das Relais 26 dem Hochachse-Drehmomenterzeuger 22 zu, welcher den Läufer des Kreisels 11 um die Hochachse 13 dreht. Weiterhin wird das elektrische Ausgangssignal des Kreiselkompaßverstärkers 25 der eingebauten Prüfschaltung 36 zugeführt, um es auf die geschilderte Weise genauso wie das elektrische Ausgangssignal des Hochachse-Trennverstärkers 27 zu überwachen.

Die Taktgeber- und Countdownschaltung 30 ist weiterhin mit einer Läuferantriebspeiseschaltung 45 verbunden, welche das logische Signal von der Taktgeber- und Countdownschaltung 30 her herunterzählt, um ein Eingangssignal für eine Countdownlogik zu erzeugen, welche vier Phasen für das Eingangssignal der Läuferantriebspeiseschaltung 45 hervorbringt. Letztere enthält zwei H-Übergangsbrücken, welche durch die Läuferantriebspeiseschaltungseingangslogiksignale getrieben werden. Die Läuferantriebspeiseschaltung 45 ist mit dem Motor des Kreisels 11 gekoppelt, wobei jede Phasenwicklung des Motors die Last für die beiden H-Brücken darstellt. Die H-Brücken werden durch eine Eintaktgleichspannung erregt. Die Eingangslogik ist mit einer Frequenzdetektorschaltung ausgestattet, um Signalverluste festzustellen und Beschädigungen des Motors zu verhindern.

Die Taktgeber- und Countdownschaltung 30 liefert schließlich ein Slipsyncsignal, welches einer Folgeschaltung 50 zugeführt wird. Letztere benutzt die logische Frequenz zur Entwicklung von Steuersignalen zu bestimmten Zeitpunkten, nämlich zum Zeitpunkt $T_0 = \text{Null}$ bzw. $T_1 = 30$ sec bzw. $T_2 = 31$ sec bzw. $T_3 = 300$ sec, aus zusätzlicher Countdownlogik und Relaistreibern. Das Steuersignal zum Zeitpunkt $T_0$ schließt einen

Schalter 52, so daß die Taktgeber- und Countdownschaltung 30 aktiviert und der Kreisel 11 erregt wird. Das nach der Zeitspanne $T_1 = 30$ sec erscheinende Steuersignal schaltet ein Relais 51 ein, welches die Ostachse-Geschwindigkeitsfesselschleife schließt, die den Ostachse-Abgriff 19, den Ostachse-Geschwindigkeitsfesselverstärker 24 und den Ostachse-Drehmomenterzeuger 20 umfaßt, ferner die oben geschilderte Hochachse-Trennschleife. Das nach der Zeitspanne $T_2 = 31$ sec abgegebene Steuersignal bewirkt die Erregung des Relais 26, so daß die Kreiselkompaßschleife geschlossen wird, während das nach der Zeitspanne $T_3 = 300$ sec gelieferte Steuersignal die Erregung des Relais 26 wieder abschaltet, um die Kreiselkompaßschleife wieder zu öffnen. Ferner schaltet das letztgenannte Steuersignal die eingebaute Prüfschaltung 36 ein, so daß bei jedem danach etwa vorhandenen Fehler eine Fehlerlampe aufleuchtet. Eine mit einer 28-Volt-Batteriegleichspannung beaufschlagte Energiequelle 53 arbeitet zu Regulier- und Leistungszwecken mit Pulsdauer-Modulation.

Der geschilderte Kursanzeiger funktioniert folgendermaßen.

Bei jeder örtlichen Breite $\lambda$ kann die Erddrehgeschwindigkeit $W_e$ in eine horizontale Komponente $W_h$ und eine vertikale Komponente $W_v$ zerlegt werden, welche in einer zur Richtung der örtlichen Schwerkraft senkrechten Ebene bzw. in der die örtliche Schwerkraftrichtung enthaltenden, in Nord/Süd-Richtung ausgerichteten Ebene liegt.

Es sei angenommen, daß die Plattform 10 mit dem Kursrahmen 14 gemäß Fig. 1 annähernd senkrecht steht. Die Ostachse 12 des mit seinem Gehäuse am Kursrahmen 14 angebrachten, trockenen Kreisels 11 mit drei Freiheitsgraden und kardanischem Biegegelenk ist über den Ostachse-Geschwindigkeitsfesselverstärker 24 auf sich selbst rückgefesselt, während die Hochachse 13 des Kreisels 11 über den Hochachse-Trennverstärker 27 an die Plattform 10 gefesselt ist. Der Ostachse-Geschwindigkeitsfesselverstärker 24 fesselt den Läufer an das Gehäuse des Kreisels 11 um die Ostachse 12, der Hochachse-Trennverstärker 27 das Gehäuse an den Läufer des Kreisels 11 um die Hochachse 13.

Wenn, wie angenommen, die Basis 6 des Kursanzeigers sich in einer horizontalen Ebene erstreckt, wobei die Ostachse 12 mit der Ost/West-Bezugsrichtung einen anfänglichen Winkel $\psi_{in} \neq$ Null einschließt und die Hochachse 13 vertikal verläuft, dann ist das Kursbezugssystem noch nicht in der Lage, einen Nordbezug zu vermitteln, weil die Ostachse 12 des Kreisels 11 nicht auf ihren Bezugspunkt, nämlich Osten, ausgerichtet ist. Der Nordbezug wird durch ein Kreiselkompaßausrichten hergestellt, welcher Vorgang definitionsgemäß dann beendet ist, wenn die Ostachse 12 orthogonal zur Erddrehgeschwindigkeit $W_e$ verläuft und also der Winkel $\psi =$ Null ist bzw. die Ostachse 12 nach Osten zeigt.

Wenn der Kursrahmen 14 anfänglich eine solche Position einnimmt, daß die Ostachse 12 um den Winkel $\psi_{in} \neq$ Null von Osten abweicht, dann stellt der Ostachse-Abgriff 19 eine Komponente $W_h \cdot \sin \psi_{in}$ der horizontalen Erddrehgeschwindigkeit $W_h$ fest. Das Gehäuse des Kreisels 11 rotiert um die Ostachse 12 des Läufers mit dieser Geschwindigkeit, und der Ostachse-Geschwindigkeitsfesselverstärker 24 gibt an den Ostachse-Drehmomenterzeuger 20 ein elektrisches Ausgangssignal ab, um den Läufer so zu bewegen, daß er dem Gehäuse folgt und der Ostachse-Abgriff 19 auf Null gehalten wird.

Ein Äquivalent des Signals für den Ostachse-Drehmomenterzeuger 20 des Kreisels 11 wird verstärkt und dem Kreiselkompaßverstärker 25 zugeführt, dessen elektrisches Ausgangssignal dem Hochachse-Drehmomenterzeuger 22 zugeht, welcher den Läufer bezüglich des Gehäuses des Kreisels 11 um die Hochachse 13 verstellt. Jegliche Relativbewegung zwischen dem Läufer des Kreisels 11 und dessen Gehäuse, also auch dem Kursrahmen 14, wird vom Hochachse-Abgriff 21 festgestellt, welcher ein entsprechendes elektrisches Ausgangssignal abgibt, das mittels des Hochachse-Trennverstärkers 27 verarbeitet wird, um den Kursrahmen-Drehmomenterzeuger 23 derart zu treiben, daß der Kursrahmen 14 dem Läufer folgt und der Hochachse-Abgriff 21 auf Null gehalten wird. Die Drehrichtung des Kursrahmens 14 ist so, daß der Winkel $\psi$ vermindert wird.

Dieses Verfahren wird fortgesetzt, bis der Ostachse-Abgriff 19 keine Komponente der horizontalen Erddrehgeschwindigkeit $W_h$ mehr feststellt, also der Winkel $\psi =$ Null ist, was gewöhnlich etwa 5 min dauert. Dann ist der Kreiselkompaßausrichtbetrieb beendet und schaltet das System in den Kurskreiselbetrieb um. Dazu wird die Kreiselkompaßschleife zwischen dem Ostachse-Geschwindigkeitsfesselverstärker 24 und dem Hochachse-Drehmomenterzeuger 22 mittels des Relais 26 geöffnet, und zwar durch die Folgeschaltung 50 oder von Hand. Der Kurskreiselbetrieb dient dazu, diejenige Ausrichtung während der Fahrt des mit dem Kursanzeiger versehenen Fahrzeuges aufrecht zu erhalten, welche beim Kreiselkompaßausrichtbetrieb erhalten worden ist. Dieses wird mit Hilfe der beschriebenen Elektronik (Ostachse-Geschwindigkeitsfesselverstärker 24 und Hochachse-Trennverstärker 27) bewerkstelligt. Der Ostachse-Geschwindigkeitsfesselverstärker 24 schützt den Läufer des Kreisels 11 vor Störungen, indem der Läufer so drehmomentbeaufschlagt wird, daß er dem Kursrahmen 14 bei allen Bewegungen der Basis 6 folgen kann, welche das Fahrzeug hervorruft. Die Hochachse 13 hält die Nordausrichtung. Jede Fahrzeugbewegung um die Hochachse 13, welche den Kursrahmen 14 stören könnte, wird vom Hochachse-Abgriff 21 erfaßt, dessen elektrisches Ausgangssignal den Kursrahmen-Drehmomenterzeuger 23 beaufschlagt, um den Kursrahmen 14 an den raumfesten und den Nordbezug liefernden Läufer des Kreisels 11 gefesselt zu halten.

**Patentansprüche**

1. Kursanzeiger, insbesondere für Panzer, mit einem als nordsuchender Kreisel und als Kurskreisel wirkenden Kreisel (11), welcher drei Freiheitsgrade und eine erste sowie eine zweite Empfindlichkeitsachse (12 bzw. 13) aufweist sowie für die erste Empfindlichkeitsachse (12) ein zur Drehung um dieselbe proportionales erstes Ausgangssignal liefert und mit einem ersten Eingangssignal sowie einem zweiten Eingangssignal zum Nachstellen um die erste bzw. zweite Empfindlichkeitsachse (12 bzw. 13) beaufschlagbar ist, wobei der Eingang für das erste Eingangssignal des Kreisels (11) über eine Geschwindigkeitsfesselschleife mit dem ersten Ausgangssignal und der Eingang für das zweite Eingangssignal des Kreisels (11) über eine Kreiselkompaßschleife ebenfalls mit dem ersten Ausgangssignal beaufschlagbar ist, gekennzeichnet durch eine Basis (6), eine Plattform (10) mit einem Freiheitsgrad, welche an der Basis (6) um eine senkrechte Achse drehbar gelagert ist, und einen Drehmomenterzeuger (23) zum Drehen der Plattform (10) um die senkrechte Achse, wobei der Kreisel (11) an der Plattform (10) mit auf deren senkrechte Drehachse ausgerichteter zweiter Empfindlichkeitsachse (13) angeordnet ist sowie zusätzlich ein zur Drehung um die zweite Empfindlichkeitsachse (13) proportionales zweites Ausgangssignal liefert, mit welchem der Drehmomenterzeuger (23) für die Plattform (10) über eine Trennschleife beaufschlagbar ist.

2. Kursanzeiger nach Anspruch 1, dadurch gekennzeichnet, daß die Geschwindigkeitsfesselschleife einen Geschwindigkeitsfesselverstärker (24), die Kreiselkompaßschleife einen Kreiselkompaßverstärker (25) sowie ein nachgeschaltetes Relais (26) und die Trennschleife einen Trennverstärker (27) aufweist.

3. Kursanzeiger nach Anspruch 1 oder 2, dadurch gekennzeichnet, daß der Kreisel (11) als trockener Kreisel mit kardanischem Biegegelenk ausgebildet ist.

4. Kursanzeiger nach Anspruch 1, 2 oder 3, dadurch gekennzeichnet, daß der Kreisel (11) ein Gehäuse, einen im Gehäuse um die beiden Empfindlichkeitsachsen (12 und 13) jeweils kippbar gelagerten Läufer, einen ersten Abgriff (19) sowie einen zweiten Abgriff (21) zur Abgabe des ersten bzw. zweiten, zur Läufer/Gehäuse-Relativdrehung um die erste bzw. zweite Empfindlichkeitsachse (12 bzw. 13) proportionalen Ausgangssignals, und einen ersten Drehmomenterzeuger (20) sowie einen zweiten Drehmomenterzeuger (22) zum Drehen des Läufers bezüglich des Gehäuses um die erste bzw. zweite Empfindlichkeitsachse (12 bzw. 13) aufweist.

5. Kursanzeiger nach einem der vorstehenden Ansprüche, gekennzeichnet durch eine an den Kreisel (11) angeschlossene Energiequelle (53).

6. Kursanzeiger nach Anspruch 5 in Verbindung mit Anspruch 2, dadurch gekennzeichnet, daß zwischen der Energiequelle (53) und dem Kreisel (11) ein Schalter (52), zwischen dem Schalter (52) und dem Kreisel (11) eine Taktgeber- und Countdownschaltung (30) zur Erzeugung eines Zeitbezugssignals beim Schließen des Schalters (52) sowie zwischen dem Geschwindigkeitsfesselverstärker (24) und dem Eingang für das erste Eingangssignal des Kreisels (11) ein Relais (51) vorgesehen ist, wobei an die Taktgeber- und Countdownschaltung (30) eine Folgeschaltung (50) zur Erzeugung eines ersten, zweiten und dritten Steuersignals nach einer ersten bzw. zweiten bzw. dritten Zeitspanne ($T_1$ bzw. $T_2$ bzw. $T_3$) angeschlossen ist, und wobei das Relais (51) mit dem ersten Steuersignal und das dem Kreiselkompaßverstärker (25) nachgeschaltete Relais (26) mit dem zweiten sowie dritten Steuersignal beaufschlagbar ist.

7. Kursanzeiger nach einem der vorstehenden Ansprüche, dadurch gekennzeichnet, daß an der Plattform (10) eine kegelstumpfförmige Kompaßkarte (16) angebracht ist.

**Claims**

1. Heading indicator, especially for tanks, having a gyroscope (11) acting as a north-seeking gyro and as a directional gyro and which has three degrees of freedom and a first and a second sensitive axis (12 and respectively 13) and provides for the first sensitive axis (12) a first output signal proportional to the rotation about the same and is adapted to be fed with a first input signal and a second input signal for restoring about said first and respectively said second sensitive axis (12 and respectively 13), wherein the input for the first input signal of the gyroscope (11) is adapted to be fed through a rate capture loop with the first output signal and the input for the second input signal of the gyroscope (11) is adapted to be fed through a gyrocompass loop also with said first output signal, characterized by a base (6), a single degree of freedom platform (10) rotatably mounted on said base (6) about a vertical axis, and a torquer (23) for rotating said platform (10) about said vertical axis, wherein said gyroscope (11) is disposed on said platform (10) with said second sensitive axis (13) aligned with its vertical axis of rotation and additionally provides a second output signal proportional to the rotation about said second sensitive axis (13) with which the torquer (23) for the platform (10) is adapted to be fed through an isolation loop.

2. Heading indicator according to claim 1, characterized in that said rate capture loop comprises a rate capture amplifier (24), said gyrocompass loop comprises a gyrocompass amplifier (25) and a following relay (26) and said isolation loop comprises an isolation amplifier (27).

3. Heading indicator according to claim 1 or 2, characterized in that said gyroscope (11) is designed as a dry gyroscope having an universal flexure hinge.

4. Heading indicator according to claim 1, 2 or 3, characterized in that said gyroscope (11) includes a case, a rotor mounted in said case so that the rotor is capable of tilting about each of said two sensitive axes (12 and 13), a first pick off (19) and a second pick off (21) for providing said first and respectively said second output signal proportional to the rotor/case relative rotation about said first and respectively said second sensitive axis (12 and respectively 13), and a first torquer (20) and a second torquer (22) for rotating said rotor with respect to said case about said first and respectively said second sensitive axis (12 and respectively 13).

5. Heading indicator according to any of the preceding claims, characterized by a power source (53) coupled to said gyroscope (11).

6. Heading indicator according to claim 5 in connection with claim 2, characterized in that a switch (52) is provided between said power source (53) and said gyroscope (11), a clock and countdown circuitry (30) for generating a time reference signal when closing said switch (52) is provided between said switch (52) and said gyroscope (11), and a relay (51) is provided between said rate capture amplifier (24) and the input for the first input signal of said gyroscope (11), wherein a sequencer (50) for generating a first, a second and a third control signal after a first and respectively a second and respectively a third time interval ($T_1$ and respectively $T_2$ and respectively $T_3$) is coupled to said clock and countdown circuitry (30), and wherein said relay (51) is adapted to be fed with said first control signal and said relay (26) following said gyroscompass amplifier (25) is adapted to be fed with said second and third control signal.

7. Heading indicator according to any of the preceding claims, characterized in that a truncated conical compass card (16) is mounted on said platform (10).

**Revendications**

1. Indicateur de cap, en particulier pour tanks, ayant un gyroscope (11) agissant comme gyro chercheur du nord et comme gyro directionnel et qui a trois degrés de liberté et un premier et un deuxième axe de sensibilité (12 et respectivement 13) et fournit, pour le premier axe de sensibilité (12), un premier signal de sortie proportionnel à la rotation autour de celui-ci et peut recevoir un premier signal d'entrée ainsi qu'un deuxième signal d'entrée pour le réajustement autour du premier et respectivement deuxième axe de sensibilité (12 et respectivement 13), l'entrée pour le premier signal d'entrée du gyroscope (11) pouvant recevoir le premier signal de sortie par l'intermédiaire d'une boucle d'asservissement de vitesse et l'entrée pour le deuxième signal d'entrée du gyroscope (11) pouvant également recevoir le premier signal de sortie par l'intermédiaire d'une boucle de compas gyroscopique, caractérisé par une base (6), une plateforme (10) ayant un degré de liberté, qui est montée sur la base (6) de manière à pouvoir tourner autour d'un axe vertical, et un générateur de couple (23) servant à faire tourner la plateforme (10) autour de l'axe vertical, ledit gyroscope (11) étant disposé sur la plateforme avec le deuxième axe de sensibilité (13) étant aligné sur l'axe de rotation vertical de celle-ci et fournissant additionellement un deuxième signal de sortie proportionel à la rotation autour du deuxième axe de sensibilité (13) et le générateur de couple (23) pour la plateforme (10) pouvant recevoir le deuxième signal de sortie du gyroscope (11) par l'intermédiaire d'une boucle de isolation.

2. Indicateur de cap selon la revendication 1, caractérisé en ce que la boucle d'asservissement de vitesse comporte un amplificateur d'asservissement de vitesse (24), que la boucle de compas gyroscopique comporte un amplificateur de compas gyroscopique (25) et un relais (26) placé à la suite et que la boucle de isolation comporte un amplificateur de isolation (27).

3. Indicateur de cap selon l'une des revendications 1 et 2, caractérisé en ce que le gyroscope (11) est sous forme de gyroscope sec avec articulation de flexion à cardan.

4. Indicateur de cap selon l'une des revendications 1 à 3, caractérisé en ce que le gyroscope (11) comporte un boîtier, un rotor monté dans le boîtier de manière à pouvoir basculer autour de chacun des deux axes de sensibilité (12 et 13), un premier capteur (19) ainsi qu'un deuxième capteur (21) pour dèlivrer le premier et respectivement le deuxième signal de sortie proportionnel à la rotation relative rotor/boîtier autour du premier et respectivement deuxième axe de sensibilité (12 et respectivement 13), et un premier générateur de couple (20) ainsi qu'un deuxième générateur de couple (22) servant à faire tourner le rotor relativement au boîtier autour du premier et respectivment deuxième axe de sensibilité (12 et respectivement 13).

5. Indicateur de cap selon l'une des revendications précédentes, caractérisé par une source d'énergie (53) raccordée au gyroscope (11).

6. Indicateur de cap selon la revendication 5 en combinaison avec la revendication 2, caractérisé en ce qu'entre la source d'énergie (53) et le gyroscope (11) est prévu un interrupteur (52), qu'entre l'interrupteur (52) et le gyroscope (11) est prévu un circuit d'horloge et de compte à rebous (30) pour engendrer un signal de référence de temps lors de la fermeture de l'interrupteur (52) et qu'entre l'amplificateur d'asservissement de vitesse (24) et l'entrée pour le premier signal d'entrée du gyroscope (11) est prévu un relais (51), un séquenceur (50) pour engendrer un premier, un deuxième et un troisième signal de commande au bout d'un premier et respectivement deuxième et respectivement troisième intervalle de temps ($T_1$ et respectivement $T_2$ et respectivement $T_3$) étant raccordé au circuit d'horloge et de compte à rebours (30) et le relais (51) pouvant recevoir le premier signal de commande et le relais (26) faisant suite à l'amplificateur de compas gyroscopique (25) pouvant recevoir le deuxième ainsi que le troisième signal de commande.

7. Indicateur de cap selon l'une des revendications précédentes, caractérisé en ce que sur la plateforme (10) est disposée une carte de compas (16) de forme tronconique.

FIG. 1

FIG. 2